# EUROPEAN PATENT SPECIFICATION

(11) **EP 2 312 067 B1**
(45) Date of publication and mention of the grant of the patent: **27.01.2016**
(21) Application number: 09772591.5
(22) Date of filing: 29.06.2009
(51) Int. Cl.: E03D 1/32, F16B 7/14

(54) **ADJUSTABLE TAP FOR FILLING TOILET TANKS**
EINSTELLBARER HAHN ZUM FÜLLEN VON ZISTERNEN
ROBINET REGLABLE POUR REMPLISSAGE DE CITERNES

(30) Priority: 01.07.2008 ES 200801971
(43) Date of publication of application: 20.04.2011
(73) Proprietor: Fominaya, S.A., 46117 Betera (ES)
(72) Inventor: FOMINAYA GONZÁLEZ, Pablo, E-46117 Betera (Valencia) (ES)
(74) Representative: Ungria López, Javier
(86) International application number: PCT/ES2009/070262
(87) International publication number: WO 2010/000902

(56) References cited:
- EP-A2- 1 371 787
- US-A- 4 340 082
- US-A- 4 414 998
- US-A- 4 765 363
- US-A- 4 945 944
- US-A- 5 439 025
- US-A- 5 878 775
- US-A- 6 003 541
- US-A- 6 047 725
- US-A- 6 155 288
- US-B1- 6 199 581

## Description

### OBJECT OF THE INVENTION

The present invention, as this specification states in its title, relates to an adjustable tap for filling toilet tanks, which has been designed and constructed for being specifically applied in the toilet tank, with an installation variable in height in order to adjust the water level into the toilet tank itself, as well as to achieve an adaptability to the dimensions of said toilet tank.

The object of the invention is to ensure that the height adjustment of the tap can be manually performed with the tap already installed. Similarly, an object of the invention is to control the return effect that usually occurs in this type of taps.

### BACKGROUND OF THE INVENTION

Currently, traditional taps for filling toilet tanks at the bottom thereof are more commonly installed every day, and in this regard Spanish Utility Model No. 271,378 can be cited. Therein a tap is described as a water adjusting feeding device for toilet tanks, which comprises a vertical inlet pipe with sealed adjusting means on the bottom of the toilet tank. This pipe is formed by two sections telescopically adjusted in relation to each other and fastened together by an outer threaded nut, allowing the volume that this toilet tank has to contain in connection with the float to be adjusted.

Said tap further comprises a top valve that can be actuated by the float itself to perform the closing and thus prevent water from entering when a certain level is reached, or to perform the opening and allow the water entry, after flushing the toilet tank. In addition, outside the mentioned telescopic pipe, a side and vertical pipe, also telescopic is included, so as the water silently falls inside the toilet tank.

Said tap has the advantage of being able to be installed in the toilet tank, regardless of the greater or lesser depth thereof. Partially eliminating the noise caused in the filling, as well as an adjustment of the water volume to be contained in the toilet tank is also achieved.

On the other hand, and more recently telescopic taps for filling toilet tanks are marketed, wherein the system for locking the telescopic sections making up the vertical pipe is made by using different pressure systems not based on the threaded nut used in the above mentioned Utility Model.

Similarly, it should be mentioned that the applicant firm itself has recently applied for the grant of a Patent of Invention also related to a tap for filling toilet tanks, based on the same principles as those mentioned above, but with the special feature that the piece which acts as a shutter, i.e. the valve, and which is associated with the corresponding float rocker is materialized by a rod with different sections allowing a double seal to be obtained.

In this Patent application, in the water flow towards the toilet tank there is a gasket, which based on its configuration also avoids bubbling and therefore the noise caused when the toilet tank is filled.

US-A-4.340.082 discloses a tap according to the preamble of claim 1.

### DESCRIPTION OF THE INVENTION

The object is solved with a tap according to claim 1.

The invention consists of a telescopic tap for filling toilet tanks, which includes a special mechanism for adjusting the height of the telescopic inlet pipe by using manual actuation on the top of the tap assembly, even above the buoy, without contacting with water.

In this regard, said mechanism is based on the fact that the telescopic water inlet pipe is composed of three bodies telescopically connected together, one as an inner tube through which the fastening at the bottom of the toilet tank is carried out, another one as a middle tube externally coupled to the inner tube and coupled thereto through the bottom edge, and the third one externally installed on the middle tube, with the capacity of moving axially from the latter. Said third body, hereinafter called the outside body, has a bottom tubular section with axial recesses into which complementary projections made for this purpose in the bottom section of the middle tube are fastened, allowing the axial movement of said outside body, which from said bottom tubular section continues in a pair of axial sectors, diametrically opposed, reaching the latter a middle section circumferentially closed, but with bottom axial extensions sandwiched between the axial sectors mentioned above, in one axial extension of which a side of the middle tube is positioned in order to avoid the rotation thereof in relation to the outside body.

This outside body, from the middle and circumferential section extends in another pair of axial arms arranged in diametrical opposition, finished at the top in separate side tabs protruding above the final casing at the top of the tap wherein the means for opening/closing the water flow, etc. are made, so that said tabs are accessible for upwardly pulling or downwardly pushing with the fingers. This results in the movement of the outside body, pulling the middle tube and thus regulating the height of the tap assembly.

On the other hand, it has been provided for that the adjustment of the water flow towards the toilet tank in the type of tap with a double seal, is created by a special geometry gasket, which slightly expands when the water pressure acts thereon from inside, closing or opening the respective air holes or inlets provided in the return system.

Finally it should be mentioned that the outlet edge of said type of tap has been provided with an outside piece for guiding the water towards the top of the buoy, a piece that has a profile shaped as an reversed "L", with its smaller and top slat being angled towards the outside to define along said branch a support and anchorage in an annular cavity provided in the top neck of the location of the corresponding valve parts, gaskets and water flow.

### BRIEF DESCRIPTION OF THE DRAWINGS

In order to complement the description that will be made and for the purpose to help provide a better understanding of the features of the invention, a set of drawings based on which innovations and advantages of the tap object of the invention will be more easily understood is attached.
Figure 1. - Shows an exploded perspective view of the three bodies making up the mechanism to adjust the height of the tap of the invention.
Figure 2. - Shows a perspective view of the tap of the invention.
Figure 3. - Shows a detail of the section of the top edge of the type of tap with two seals, including the special gasket and the piece for guiding the water towards the toilet tank buoy.

### PREFERRED EMBODIMENT OF THE INVENTION

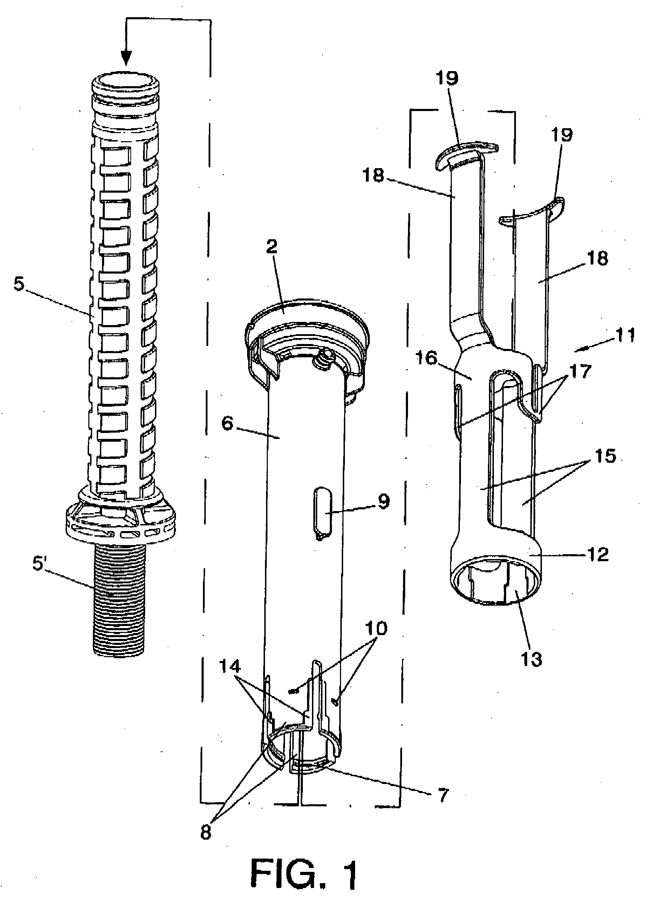

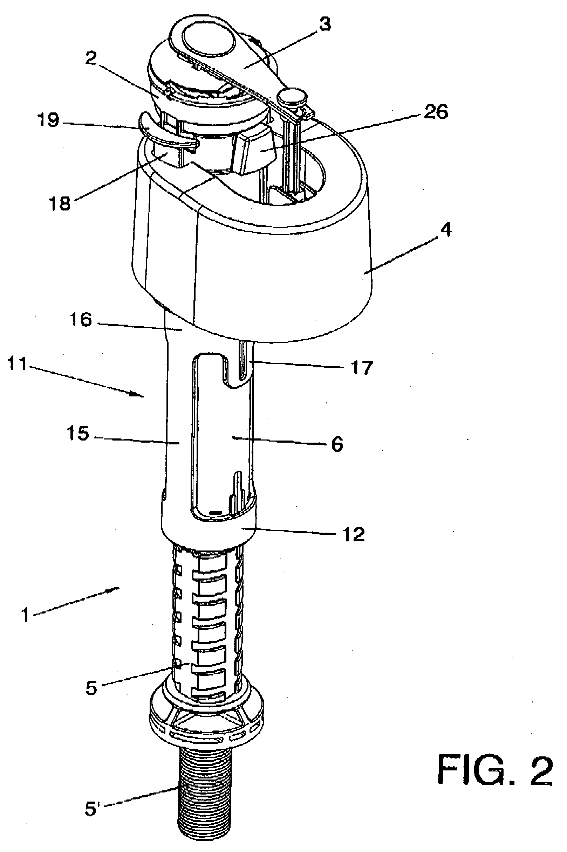

As it can be seen from the referred figures, namely in Figures 1 and 2, the tap of the invention comprises a telescopic inlet pipe 1 for water entering and passing towards the corresponding toilet tank on whose base the tap will be installed. In addition, it includes at the top a tubular part 2 wherein the means for opening/closing, gaskets, etc. are located, on top of which a rocker 3 connected to the corresponding toilet tank buoy is included, all of this as is conventional, including the protective and enclosure casing 4.

Well then, the first major novel feature of said tap, precisely lies in the telescopic inlet pipe 1, which comprises three bodies plugged together so that the first body is an inner tube 5 with threaded rod 5' in its bottom edge in order to tightly install it in the bottom of the toilet tank. The second body is another tube 6, the middle tube 6, in this case, wherein the inner tube 5 is housed. Said middle tube 6 has at its bottom edge some extreme and resilient sections 8 provided with slightly spiral projections 7 for interacting with the surface of the inner tube 5. In this way said two tubes 5 and 6 are interrelated, one inside the other, the middle tube 6 having, at least, one side projection 9 in a middle area of its length, as well as the tubular part 2 making up a top neck wider than the diameter itself of the mentioned middle tube 6, its bottom resilient edges 8 further having some limits 10.

The third body is an outside body 11 and is provided to position the middle tube 6 therein, a tubular and bottom section 12 comprising inner recesses 13 in the axial direction, suitable for receiving the fitting, with the capacity to displace in relation to each other, from the respective projections 14 made for this purpose in the resilient and bottom sections 8 of the middle tube 6.

Two sectors 15 arranged in diametrical opposition, which converge in a circumferential middle section 16 with downward side projections 17, sandwiched between the sectors 15, which are complementary to the projection 9 of the middle tube are upwardly axially projected from the bottom tubular section 12 of the outside body 11. They make up a guiding and stopping system for the upward and downward movements that the outside body 11 has to perform in relation to the middle body or tube 6.

Two axial arms 18 also diametrically opposed finished in separate tabs 19 that in the installation of the tap assembly are located above the casing 4 and therefore above the toilet tank buoy in which said tap is applied.

In this way, the inlet pipe 1 can be adjusted in length or height by just upwardly pulling and downwardly pushing the tabs 19 of the outside body 11, resulting in the movement of the latter and subsequent pulling of the middle tube 6, in either direction, thus achieving the intended adjustment with the tap installed.

It is also possible to adjust the tap once unlocked, by rotating it. The adjustment may also be carried out in a spiral manner.

The projection 9 of the middle tube 6 constitutes a guide for the movement of the latter and also a means to avoid the rotation of such middle tube 6, as well a limitation in its vertical movement, in connection with the limits 10 provided in the bottom, namely in the resilient sections 8 of the middle tube 6 itself.

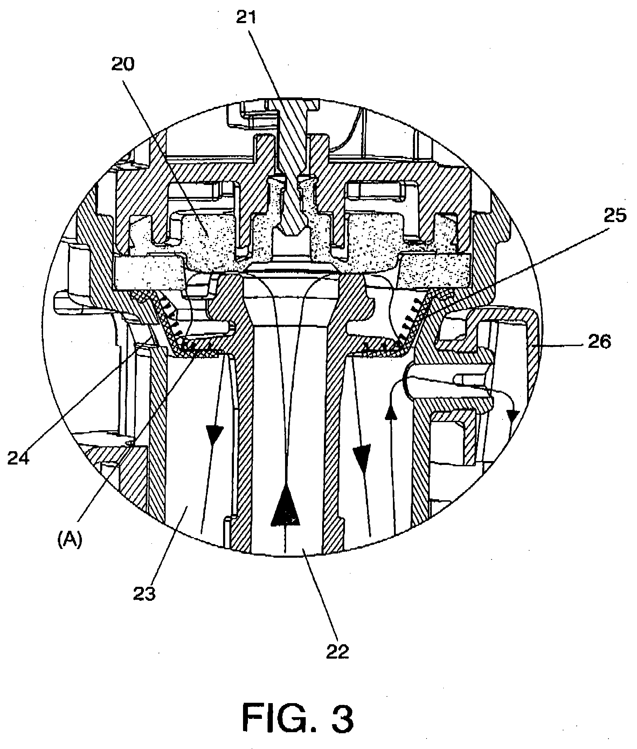

Figure 3 shows the top part of the tap, in an alternative embodiment, with a gasket 20 to establish the water closing/opening, a pulling rod 21 to carry out the opening, the water inlet pipe 22, the water outlet 23 towards the toilet tank, and an air inlet 24 for the depression of the mains, etc., incorporating as a novelty a specially designed gasket 25, provided for adjusting the water flow into the toilet tank, and in turn for slightly expanding when water pressure acts thereon from the inside, closing or opening the air inlets 24 used in the non-returning system, when water enters into the toilet tank the inlet 24 is closed, limiting the air flow to the liquid tube, avoiding the bubbling and filling noise, whereas when water pressure stops, the inlet 24 is opened and allows the absorption of air from the mains in order to achieve the non-returning effect.

The gasket 25, when water pressure stops and the inlet 24 is opened, is also throttled, reducing or limiting the flowing area A in order to contribute in preventing the quick water suction from the toilet tank. This is achieved by the annular extension that said gasket 25 has.

Finally, it should be noted that at the outlet of the mentioned tap a piece 26 shaped as a reversed "L" has been provided to guide the water towards the top of the toilet tank buoy.

## Claims

1. Adjustable tap for filling toilet tanks, which includes an inlet pipe (1) for the water entry, which can be coupled at the bottom of the corresponding toilet tank and has the possibility of adjusting the length of said inlet pipe in order to adapt to toilet tanks with different depths, a neck for positioning the different means allowing the water flow, disruption thereof and flow rate adjustment, being established at the top, wherein the inlet pipe (1) consists of three bodies (5, 6, 11) coupled together with the capacity to move therebetween, one of which bodies makes up an inner tube (5) with a rod (5') for coupling at the bottom of the toilet tank, said inner tube (5) being housed in a middle tube (6) making up the second body, said middle tube (6) being mobile with regard to the inner tube (5), the middle tube (6) being mounted inside the third body, the latter being considered as an outside body (11), with limited movement with regard to the middle tube (6), said outside body (11) having pulling and/or pushing means in order to achieve the corresponding relative movement of the middle tube (6) with respect to the inner tube (5) and thus the height or length adjustment of the inlet pipe (1), by manual actuation on the top of the tap assembly, **characterized in that**, in use, the three coupled bodies of the inlet pipe (1) have the capacity to move axially therebetween, wherein a limited axial movement is possible of the outside body with regard to the midde tube.

2. Adjustable tap for filling toilet tanks, according to claim 1, **characterized in that** the middle tube (6) has at its bottom edge some resilient sections (8) with smoothly spiral internal projections (7) for interacting with the surface of the inner tube ( 5), further having a side projection (9) as an element for guiding and stopping the vertical or axial movement between said middle tube (6) and the outside body (11), the latter being provided with inner recesses (13) complementary to additional projections (14) of the middle tube (6) for positioning and connecting together the middle tube (6) and the outside body (11).

3. Adjustable tap for filling toilet tanks, according to claim 2, **characterized in that** the outside body (11) comprises a bottom tubular section (12) in which recesses (13) are made, from the bottom tubular section (12) two axial sectors (15) are arranged and projected in diametrical opposition, which sectors (15) converge in a middle and circumferential section (16) with axial and bottom projections (17) for positioning said side projection (9) making up a limit and guide for the movements between the middle tube (6) and the outside body (11), a pair of axial arms (18) being extended after said middle and circumferential section (16), also in an diametrically opposite arrangement, finished in side tabs (19) making up the pulling and/or pushing means to perform the length adjustment of the inlet pipe (1) with the tap installed.

4. Adjustable tap for filling toilet tanks, according to claim 1, **characterized in that** at the top corresponding to the water outlet (23) to the toilet tank, a gasket (25) of special configuration has been provided for adjusting the water flow into the toilet tank and limiting the air flow through the corresponding inlets (24), according to the water pressure, in order to avoid the bubbling or filling noise of the toilet tank.

5. Adjustable tap for filling toilet tanks, according to claim 4, **characterized in that** in the outlet of the general body of the tap a piece (26) shaped as an reversed "L" has been provided for guiding the water towards the top of the toilet tank buoy.

## Patentansprüche

1. Verstellbarer Hahn zum Füllen von Spülkästen, der ein Einlassrohr (1) für den Eintritt von Wasser, das an dem Boden des entsprechenden Spülkastens angebracht werden kann und die Möglichkeit bietet, die Länge des Einlassrohrs zu verstellen, um es an Spülkästen mit unterschiedlichen Tiefen anzupassen, sowie einen Hals zum Positionieren der unterschiedlichen Einrichtungen enthält, die den Wasserstrom, Unterbrechung desselben und Regulierung der Strömungsmenge ermöglichen, der an dem oberen Ende eingerichtet ist, wobei das Einlassrohr (1) aus drei Körpern (5, 6, 11) besteht, die miteinander gekoppelt sind, wobei sie in der Lage sind, sich zueinander zu bewegen, und einer der Körper eine innere Röhre (5) mit einer Stange (5') zum Anbringen am Boden des Spülkastens bildet, die innere Röhre (5) in einer mittleren Röhre (6) aufgenommen ist, die den zweiten Körper bildet, wobei die mittlere Röhre (6) in Bezug auf die innere Röhre (5) bewegt werden kann, die mittlere Röhre (6) im Inneren des dritten Körpers angebracht ist und letzterer als ein äußerer Körper (11) mit eingeschränkter Bewegung in Bezug auf die mittlere Röhre (6) betrachtet wird, der äußere Körper (11) Einrichtungen zum Ziehen und/oder Schieben aufweist, um die entsprechende relative Bewegung der mittleren Röhre (6) in Bezug auf die innere Röhre (5) und damit die Verstellung von Höhe oder Länge des Einlassrohrs (1) durch manuelle Betätigung an dem oberen Ende der Hahnanordnung zu bewirken, **dadurch gekennzeichnet, dass** in Funktion die drei verbundenen Körper des Einlassrohrs (1) in der Lage sind, sich axial zueinander zu bewegen, wobei eine eingeschränkte axiale Bewegung des äußeren Körpers in Bezug auf die mittlere Röhre möglich ist.

2. Verstellbarer Hahn zum Füllen von Spülkästen nach Anspruch 1, **dadurch gekennzeichnet, dass** die mittlere Röhre (6) an ihrer Unterkante einige elastische Abschnitte (8) mit leicht spiralförmigen Innenvorsprüngen (7) aufweist, die mit der Oberfläche der inneren Röhre (5) in Wechselwirkung treten, und sie des Weiteren einen seitlichen Vorsprung (9) als ein Element aufweist, mit dem die vertikale oder axiale Bewegung der mittleren Röhre (6) und des äußeren Körpers (11) zueinander geführt und unterbrochen wird, wobei letzterer mit inneren Vertiefungen (13) versehen ist, die komplementär zu zusätzlichen Vorsprüngen (14) der mittleren Röhre (6) sind, mit denen die mittlere Röhre (6) und der äußere Körper (11) positioniert und miteinander verbunden werden.

3. Verstellbarer Hahn zum Füllen von Spülkästen nach Anspruch 2, **dadurch gekennzeichnet, dass** der äußere Körper (11) einen unteren röhrenförmigen Abschnitt (12) umfasst, in dem Vertiefungen (13) vorhanden sind, von dem unteren röhrenförmigen Abschnitt (12) her zwei axiale Sektoren (15) angeordnet sind und einander diametral gegenüberliegend vorstehen, wobei die Sektoren (15) in einem mittigen, in Umfangsrichtung verlaufenden Abschnitt (16) mit axialen und unteren Vorsprüngen (17) zum Positionieren des seitlichen Vorsprungs (9) zusammenlaufen, der eine Begrenzung und Führung für die Bewegung der mittleren Röhre (6) und des äußeren Körpers (11) zueinander bildet, und sich paarige axiale Arme (18) nach dem mittigen, in Umfangsrichtung verlaufenden Abschnitt (16) ebenfalls einander diametral gegenüberliegend angeordnet erstrecken und in seitlichen Ansätzen (19) enden, die die Einrichtungen zum Ziehen und/oder Schieben bilden, mit denen die Verstellung der Länge des Einlassrohrs (1) durchgeführt wird, wenn der Hahn installiert ist.

4. Verstellbarer Hahn zum Füllen von Spülkästen nach Anspruch 1, **dadurch gekennzeichnet, dass** an dem oberen Ende, das dem Wasserauslass (23) in den Spülkasten entspricht, eine Dichtung (25) mit speziellem Aufbau vorhanden ist, um den Wasserstrom in den Spülkasten zu regulieren und den Luftstrom über die jeweiligen Einlasse (24) entsprechend dem Wasserdruck zu begrenzen und die Blasenbildung oder das Geräusch beim Füllen des Spülkastens zu vermeiden.

5. Verstellbarer Hahn zum Füllen von Spülkästen nach Anspruch 4, **dadurch gekennzeichnet, dass** in dem Auslass des Gesamtkörpers des Hahns ein Teil (26) vorhanden ist, das umgekehrt L-förmig ist, um das Wasser zu dem oberen Ende des Spülkasten-Schwimmers zu leiten.

## Revendications

1. Robinet réglable pour remplir des réservoirs de toilettes, qui inclut un tuyau d'entrée (1) pour l'entrée d'eau, qui peut être couplé au fond du réservoir de toilettes correspondant et a la possibilité de régler la longueur dudit tuyau d'entrée afin de s'adapter à des réservoirs de toilettes avec différentes profondeurs, un col pour positionner les différents moyens permettant l'écoulement d'eau, l'interruption de celui-ci et le réglage de la vitesse d'écoulement, établis en haut, dans lequel le tuyau d'entrée (1) consiste en trois corps (5, 6, 11) couplés ensemble avec la capacité de se déplacer les uns par rapport aux autres, l'un desquels corps forme un tube intérieur (5) avec une tige (5') pour couplage au fond du réservoir de toilettes, ledit tube intérieur (5) étant logé dans un tube médian (6) formant le second corps, ledit tube médian (6) étant mobile par rapport au tube intérieur (5), le tube médian (6) étant monté à l'intérieur du troisième corps, ce dernier étant considéré comme un corps extérieur (11), avec un déplacement limité par rapport au tube médian (6), ledit corps extérieur (11) comportant des moyens de traction et/ou de poussée afin de permettre le mouvement relatif correspondant du tube médian (6) par rapport au tube intérieur (5) et ainsi le réglage en hauteur ou en longueur du tuyau d'entrée (1), par un actionnement manuel sur le haut de l'ensemble de robinet, **caractérisé en ce que**, en utilisation, les trois corps couplés du tuyau d'entrée (1) ont la capacité de se déplacer axialement les uns par rapport aux autres, dans lequel un déplacement axial limité est possible du corps extérieur relativement au tube médian.

2. Robinet réglable pour remplir des réservoirs de toilettes, selon la revendication 1, **caractérisé en ce que** le tube médian (6) a au niveau de son bord inférieur quelques sections élastiques (8) avec des saillies intérieures légèrement spirales (7) pour interagir avec la surface du tube intérieur (5), comportant en outre une saillie latérale (9) comme un élément pour guider et stopper le déplacement vertical ou axial entre ledit tube médian (6) et le corps extérieur (11), ce dernier étant pourvu d'évidements intérieurs (13) complémentaires aux saillies supplémentaires (14) du tube médian (6) pour positionner et connecter ensemble le tube médian (6) et le corps extérieur (11).

3. Robinet réglable pour remplir des réservoirs de toilettes, selon la revendication 2, **caractérisé en ce que** le corps extérieur (11) comprend une section tubulaire inférieure (12) dans laquelle des évidements (13) sont pratiqués, depuis la section tubulaire inférieure (12) deux secteurs axiaux (15) sont agencés et font saillie en opposition diamétrale, lesquels secteurs (15) convergent dans une section (16) médiane et circonférentielle avec des saillies axiales et inférieures (17) pour positionner ladite saillie latérale (9) formant une limite et un guide pour les mouvements entre le tube médian (6) et le corps extérieur (11), une paire de bras axiaux (18) étant étendus après ladite section (16) médiane et circonférentielle, aussi dans un agencement diamétralement opposé, finis dans des pattes latérales (19) formant les moyens de traction et/ou de poussée pour réaliser le réglage de longueur du tuyau d'entrée (1) avec le robinet installé.

4. Robinet réglable pour remplir des réservoirs de toilettes, selon la revendication 1, **caractérisé en ce qu'**au niveau du haut correspondant à l'orifice de sortie d'eau (23) vers le réservoir de toilettes, un joint (25) de configuration spéciale a été placé pour régler l'écoulement d'eau dans le réservoir de toilettes et limiter l'écoulement d'air à travers les orifices d'entrée (24) correspondants, en fonction de la pression de l'eau, afin d'éviter les bruits de bulles ou de remplissage du réservoir de toilettes.

5. Robinet réglable pour remplir des réservoirs de toilettes, selon la revendication 4, **caractérisé en ce que** dans l'orifice de sortie du corps général du robinet une pièce (26) formée comme un "L" renversé a été placée pour guider l'eau vers le haut de la bouée du réservoir de toilettes.
